# EUROPEAN PATENT APPLICATION

(11) **EP 4 681 540 A1**
(43) Date of publication of application: **21.01.2026**
(21) Application number: 25189310.3
(22) Date of filing: 14.07.2025
(51) Int. Cl.: A21C 9/02, F26B 15/12

(54) **A LONG PASTA PRODUCTION PLANT**

(30) Priority: 18.07.2024 IT 202400016678
(71) Applicant: Anselmo Impianti S.r.l., 40121 Bologna BO (IT)
(72) Inventor: ANSELMO, Fabrizio, 12041 Bene Vagienna (CN) (IT)
(74) Representative: Trentin, Michele

(57) **Abstract**

A long pasta production plant having a multi-storey area **(2)** comprising: a first storey **(3)** and a subsequent storey **(4)** respectively having a first pair of chains **(6)** and a second pair of chains **(7)** for moving long pasta support sticks **(9);** a mover **(10)** of the stick **(9)** between the first storey **(3)** and the subsequent storey **(4).** The mover **(10)** comprises a pair of collection elements **(11)** of the support sticks **(9)** so as to lift them from the first pair of chains **(6)** of the first storey **(3),** laterally move away from the first storey **(3),** vertically move towards the subsequent storey **(4),** laterally approach the subsequent storey **(4)** until they overlap, lay the sticks **(9)** above the second pair of chains **(7)** of the subsequent storey **(4).**

## Description

### Field of application

The present invention is applicable to the food sector and relates to pasta production.

In more detail, the present invention refers to a portion of a long pasta production plant.

### State of the art

In the field of industrial pasta production, plants are known in which there is a first dough preparation area where the ingredients are first mixed in a special tank and then, once the dough is homogeneous and has the correct consistency, transport it inside a duct provided with a screw that pushes the dough towards an extruder through which the pasta is given the desired shape. To complete the pasta formation process, a cutting element is arranged near the die that allows the pasta to be cut to the desired length.

Once the pasta has been formed, it is moved on to the drying area. First, the pasta is inserted into what is known as a pre-drying oven in which only the outer layer of the pasta is dried. Subsequently, it moves to the actual drying oven where the moisture inside the pasta is almost completely removed. Only after complete drying can the pasta then be packaged and distributed for sale.

At least initially, both the pre-drying ovens and the drying ovens were made on a single storey and the pasta travels the entire length thereof arranged straddling special support sticks for long pasta.

However, the aforesaid ovens have certain drawbacks among which, first of all, the space occupied.

In fact, since it is necessary for the pasta to remain in the oven for a certain period of time to dry properly, the oven must have an adequate length.

As a result, the more pasta that needs to be dried, the longer the oven must be.

To overcome the aforesaid drawbacks, multi-storey drying and/or pre-drying ovens are known which, therefore, extend in height.

In detail, in the aforesaid ovens the pasta is transported on the sticks that are arranged resting on special chains or racks. In particular, the latter follow a path similar to a snake inside the oven. As a result, the sticks are transported along a first storey at the end of which they are moved vertically and then change direction and travel the subsequent storey, and so on until the last storey. It follows, therefore, that the path is continuous between one storey and the other without interruptions. However, such an aspect does have some drawbacks.

In fact, in the passage from one storey to the next, due to the change of direction from horizontal to vertical there is a rocking of the pasta hanging on the sticks, which could lead to the fall of the product

As a result, it can hit the walls of the oven, also resulting in contamination of the finished product.

And not only that. The movement induced on the pasta could also be violent enough to cause breaks or points of cohesion between the strands of long pasta.

This therefore results in a loss of quality of the finished product.

EP 2 634 518 A1, US 3 258 103 A and US 2 583 847 A are known, which are an example of the state of the art described up to now and which involve the problems set out above.

### Presentation of the invention

The object of the present invention is to at least partially overcome the drawbacks highlighted above by providing a long pasta production plant which allows optimal maintenance of the quality of the pasta produced despite the nonlinear production path.

In particular, a further object of the present invention is to provide a long pasta production plant which makes it possible to prevent the pasta from coming into contact with the walls of the pre-drying or drying oven and which, therefore, does not suffer contamination.

As a result, another object of the present invention is to provide a long pasta production plant that makes it possible to prevent the long pasta from rocking and falling during transfers from one storey to the next.

Therefore, a further object of the present invention is to provide a long pasta production plant that makes it possible to prevent the long pasta from being damaged or the pasta strands from sticking together.

A further object of the present invention is to provide a long pasta production plant that makes it possible to dry large quantities of pasta while keeping the plant compact.

Said objects, as well as others which will become clearer below, are achieved by a long pasta production plant in accordance with the following claims, which are to be considered an integral part of the present patent.

In particular, the long pasta production plant has at least one multi-storey area comprising at least one first storey and at least one subsequent storey.

Advantageously, this allows extending the system in height instead of in length.

As a result, still advantageously, what has been said above makes it possible to keep the dimensions of the system compact.

Still advantageously, the above makes it possible to save space with respect to what occurs with long pasta production plants that extend in length, being single-storey.

According to an aspect of the invention, the first storey and the subsequent storey respectively comprise at least a first pair of chains and at least a second pair of chains for handling at least one long pasta support stick.

Advantageously, the presence of the first pair and the second pair of chains allows moving the dough along the length of the first storey and of the subsequent storey of the plant of the invention.

According to another aspect of the invention, the long pasta production plant comprises at least one mover of the support stick between at least the first storey and at least the subsequent storey.

According to a further aspect of the invention, the mover comprises at least one pair of collection elements of the support stick.

Furthermore, the support stick collection elements are configured to lift it from the first pair of chains of the first storey, move laterally away from the first storey, move vertically towards the subsequent storey, approach the subsequent storey laterally until they overlap and, finally, lay the support stick above the second pair of chains of the subsequent storey.

It follows, advantageously, that what has been said makes it possible to avoid sudden stops and consequent changes of direction of the sticks.

This advantageously makes it possible to prevent the long pasta hanging on the sticks from rocking and therefore, still advantageously, to prevent it from coming into contact with the walls of the long pasta production plant and from falling or being contaminated

It follows, still advantageously, that the above makes it possible to prevent the pasta from being contaminated.

Still advantageously, the pair of collection elements for transporting the long pasta support sticks from the first storey to the subsequent storey allows obtaining a quality finished product.

According to a further aspect of the invention, to allow the above-described movement of the collection elements, the mover comprises at least one vertical movement kinematics.

Moreover, according to another aspect of the invention, the mover further comprises a horizontal translation device of the vertical movement kinematics.

Advantageously, the presence of the horizontal translation device allows the vertical movement kinematics to be moved away from the first storey to move the sticks vertically.

Still advantageously, the horizontal translation device therefore allows the pair of collection elements to be brought laterally closer to the subsequent storey until they overlap and then allow the stick to rest on the second pair of chains of the subsequent storey.

From the above, the above objects are achieved by a method for moving at least one long pasta support stick from a first storey to a subsequent storey in a multi-storey long pasta production plant comprising at least one long pasta support stick, said method being characterized in that it comprises the following steps:
- lifting said at least one support stick from said first storey;
- laterally moving away from said first storey;
- vertically moving towards said subsequent storey;
- laterally approaching said subsequent storey until they overlap;
- laying said at least one stick above said subsequent storey.

### Brief description of the drawings

Further characteristics and advantages of the invention will become more apparent in the light of the detailed description of a preferred, but not exclusive, embodiment of a long pasta production plant, illustrated by way of non-limiting example with the aid of the attached tables of drawings in which:

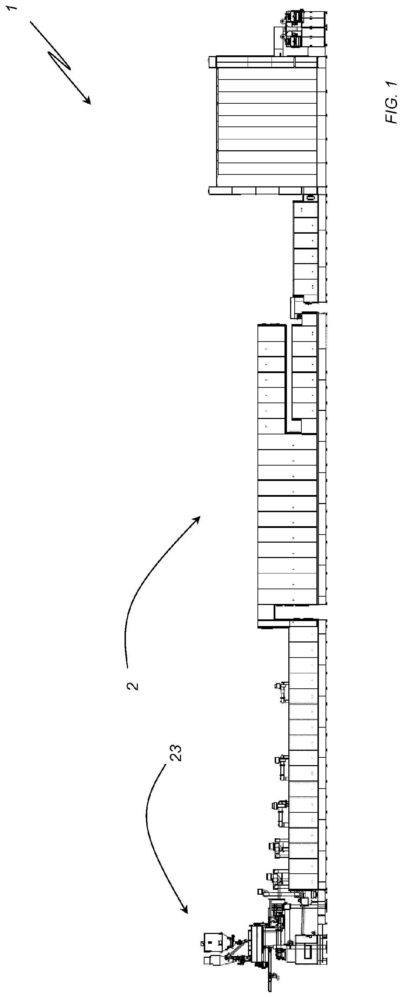

FIG. 1 depicts a long pasta production plant according to the invention in side view;

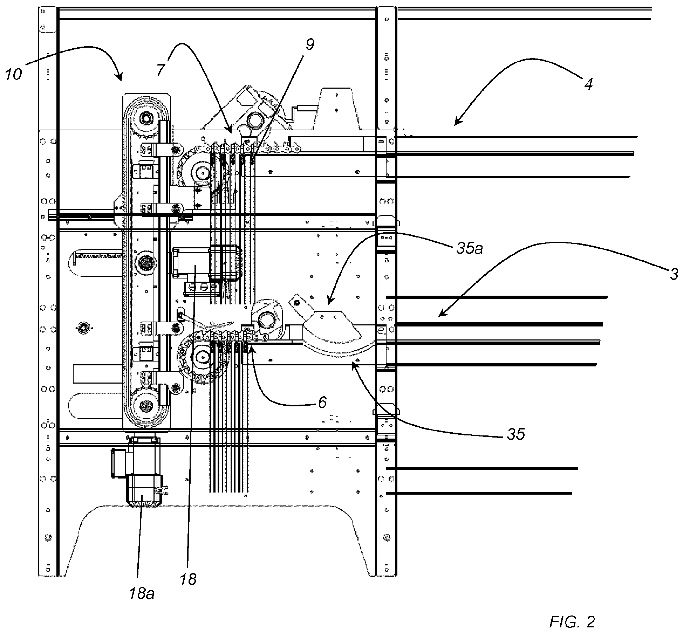

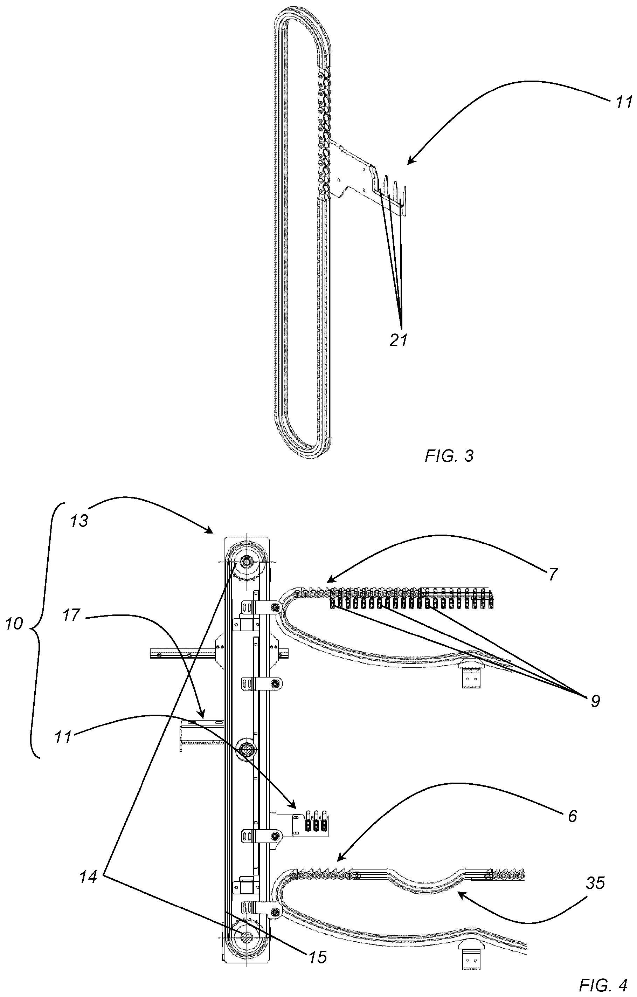

FIGS. 2 to 4 depict details of the production plant of FIG. 1;
FIG. 5 depicts a functional diagram of an operating step of a detail of the production plant of FIG. 1;

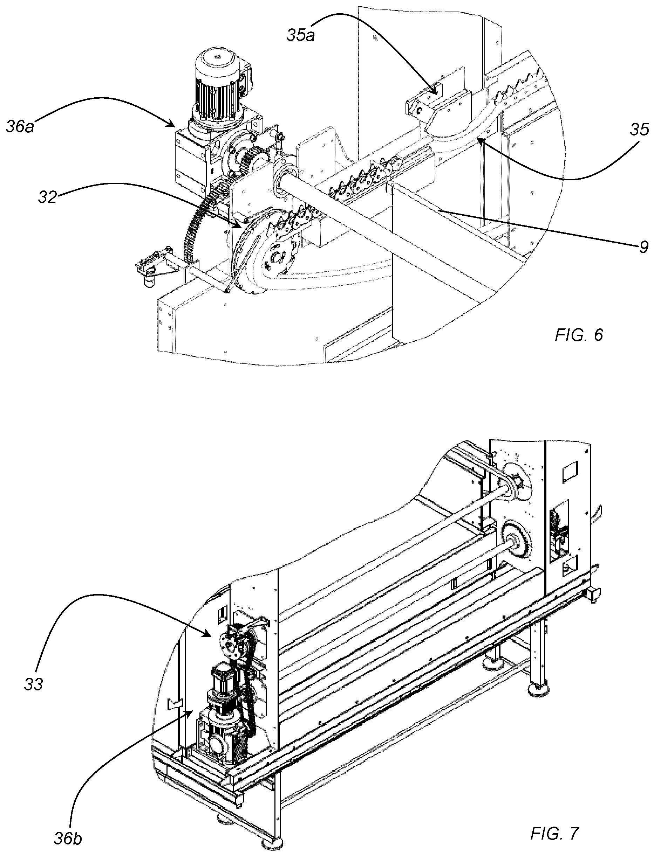

FIGS. 6 to 11 depict further details of the production plant of FIG. 1.

### Detailed description of some preferred embodiments

With reference to the aforementioned figures, a long pasta production plant **1** is described which has a multi-storey area **2** comprising a first storey **3** and a subsequent storey **4.**

As for the storeys of the multi-storey area **2,** it is noted that the invention is described herein with reference to the passage from the first storey **3** to the subsequent storey **4** but obviously the invention is also applicable for the further storeys beyond the first storey **3** and the subsequent storey **4.** Moreover, it should be noted that the number of storeys of the multi-storey area **2** must not be considered a limiting characteristic for the invention since they can be in any number. The raising or lowering movement is also a non-limiting characteristic for the invention, as it can be applied to both cases.

In the detail of the embodiment described herein, the multi-storey area **2** comprises the dryer of the long pasta production plant **1** and, in particular, refers to the drying oven.

However, such an aspect must not be considered limiting for different embodiments of the invention according to which, for example, the pre-drying oven is also multi-storey, i.e. only the pre-drying oven is multi-storey while the drying oven is single-storey. It is therefore evident that, for the purposes of the described invention, the area of the long pasta production plant that is multi-storey is indifferent.

Advantageously, this allows extending the long pasta production plant **1** in height instead of in length.

It follows, still advantageously, that what has been said makes it possible to keep the production cycle of the pasta unchanged while having the dimensions of the plant **1** compact in terms of length.

Still advantageously, therefore, the above makes it possible to save space with respect to what occurs with long pasta production plants that extend in length, being single-storey.

According to an aspect of the invention, the first storey **3** and the subsequent storey **4** respectively comprise a first pair of chains **6** and a second pair of chains **7** for moving the long pasta support sticks **9.**

According to another aspect of the invention, the long pasta production plant 1 comprises a mover **10** of each support stick **9** between the first storey **3** and the subsequent storey **4.**

According to a further aspect of the invention, the mover **10** comprises a pair of collection elements **11** of the support sticks **9.**

Advantageously, the collection elements **11** allow lifting the support sticks **9** from the first pair of chains **6.**

It follows, still advantageously, that what has been said above allows preventing the long pasta hanging on the support sticks **9** from undergoing a sudden stop of the first pair of chains **6** as instead occurs in some multi-storey drying ovens of the prior art.

According to a further aspect of the invention, to allow the subsequent movement of the collection elements **11** from the first storey **3** to the subsequent storey **4** described, the mover **10** also comprises a vertical movement kinematics **13** and a horizontal translation device **17** of the vertical movement kinematics **13.**

On the one hand, advantageously, the vertical movement kinematics **13** allow the support sticks **9** of long pasta to be transported from the first storey 3 to the subsequent storey **4,** whether it is higher or lower with respect to the first storey **3.**

On the other hand, still advantageously, the presence of the horizontal translation device **17** makes it possible to laterally move the vertical movement kinematics **13** away from the first storey **3.**

Still advantageously, the horizontal translation device **17** subsequently allows the pair of collection elements **11** to be brought laterally closer to the subsequent storey **4** until they overlap.

Still advantageously, therefore, the coexistence of the collection elements **11,** the vertical movement kinematics **13** and the horizontal translation device **17** allows the support sticks **9** of the long pasta to be lifted from the first pair of chains **6** of the first storey **3,** to move laterally away from the first storey **3,** to move vertically towards the subsequent storey **4,** to approach the subsequent storey **4** laterally until they overlap and, finally, to lay the support stick **9** above the second pair of chains **7** of the subsequent storey **4.**

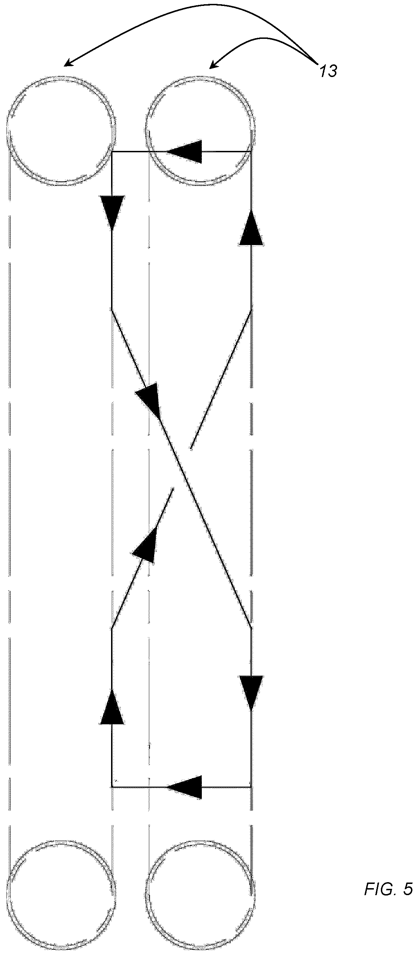

It follows, still advantageously, that, as can be seen in fig. 5, the above allows the support sticks **9** to be moved from the first storey **3** to the subsequent storey **4** with a gentle movement, drawing a path in the shape of an eight, without therefore involving sudden stops and subsequent changes of direction in the movement of the support sticks **9.**

This advantageously makes it possible to prevent the long pasta hanging on the support stick **9** from rocking and therefore, still advantageously, to prevent it from coming into contact with the walls of the long pasta production plant **1** and from falling.

It follows, still advantageously, that the above makes it possible to prevent the pasta from being contaminated.

Still advantageously, the pair of collection elements **11** for transporting the long pasta support sticks **9** from the first storey **3** to the subsequent storey **4** allows obtaining a quality finished product.

In detail of the conformation of the vertical movement kinematics **13,** it is noted that in the embodiment described herein it comprises a pair of toothed wheels **14** and a transmission chain **15.** In particular, each collection element of the pair of collection elements **11** is operatively coupled to the transmission chain **15.**

However, what has been said so far must not be considered a limiting characteristic for different embodiments of the invention according to which the vertical movement kinematics is performed in different ways.

As for the conformation of the horizontal translation device **17,** according to another aspect of the invention, it comprises a fixed rack with toothed wheel. However, this should not be understood in a limiting sense for the invention, the horizontal translation device being able to be carried out in different ways such as, for example, using hydraulic or mechanical pistons or worm screws.

The movement of the kinematics **13** and the horizontal translation device **17** is allowed thanks to the fact that according to another aspect of the invention the plant **1** comprises a pair of motors **18** and **18a** respectively for the movement of the horizontal translation device **17** and the vertical movement kinematics **13.**

According to another aspect of the invention, each of the collection elements of the pair of collection elements **11** comprises a shaped body in which three depressions **21** are identified for housing in each thereof a free end of a support stick **9.**

Advantageously, the presence of the three depressions **21** allows several support sticks **9** to be moved at a time, in particular, in this case three support sticks **9.**

It follows, still advantageously, that the above makes it possible to move a greater amount of long pasta within the multi-storey area **2** in the same movement time of a single stick.

Consequently, advantageously, an equal quantity of moved pasta corresponds to the possibility of slowing the movement speed from one storey to another thereof, thus increasing the security that the pasta is not subjected to traumatic movements. Alternatively, such a characteristic can also be exploited, at points in the plant **1** where the processing time is not a binding characteristic, to accelerate production itself.

This aspect also, however, must not be considered as a limitation for different embodiments of the invention according to which the collection elements comprise a different number of depressions other than three.

The above regarding the possibility of moving a greater quantity of long pasta in the production plant **1** requires clarification. Typically, in known long pasta production plants the support sticks have a maximum longitudinal measurement of 2550 mm. On the contrary, in the embodiment of the long pasta production plant **1** described herein, the support sticks **9** have a longitudinal measurement greater than 2550 mm and, in particular, measure 2750 mm. Well, the fact that the support sticks **9** are longer implies the presence of more pasta and therefore a greater weight on the sticks **9.** If, therefore, the sticks **9** are subjected to non-fluid movements, they tend to oscillate more, also causing the pasta to oscillate (the greater weight of the pasta increases the twisting moment of the stick). Advantageously, however, with the mover **10** of the invention this is avoided because, as mentioned above, not only is the movement more fluid, but it is also even possible to decelerate the vertical movement with respect to what occurs in the prior art. It is therefore evident that the mover **10** of the invention allows, synergistically, to also lengthen the support stick **9** thus increasing the pasta production while preserving or even improving the quality of the product

Moreover, the greater size of the support sticks **9** with the consequent possibility of supporting a greater amount of pasta, entails the need to apply further measures to the long pasta production plant **1** in order to increase the amount of pasta produced.

As in the known plants, the plant **1** comprises a long pasta preparation area **23.** In detail, it comprises a kneader **24** where the ingredients contained within a tank **25** are mixed by means of a plurality of blades **26** that are moved with rotary motion around an axis. In particular, the rotary motion performed by the blades **26** hits the inner perimeter of the tank **25.**

Once the dough has reached the appropriate consistency, it is transported inside a duct in which there is a compression screw **27** that pushes the dough towards a die **28** from which the dough comes out in the form of the desired pasta format.

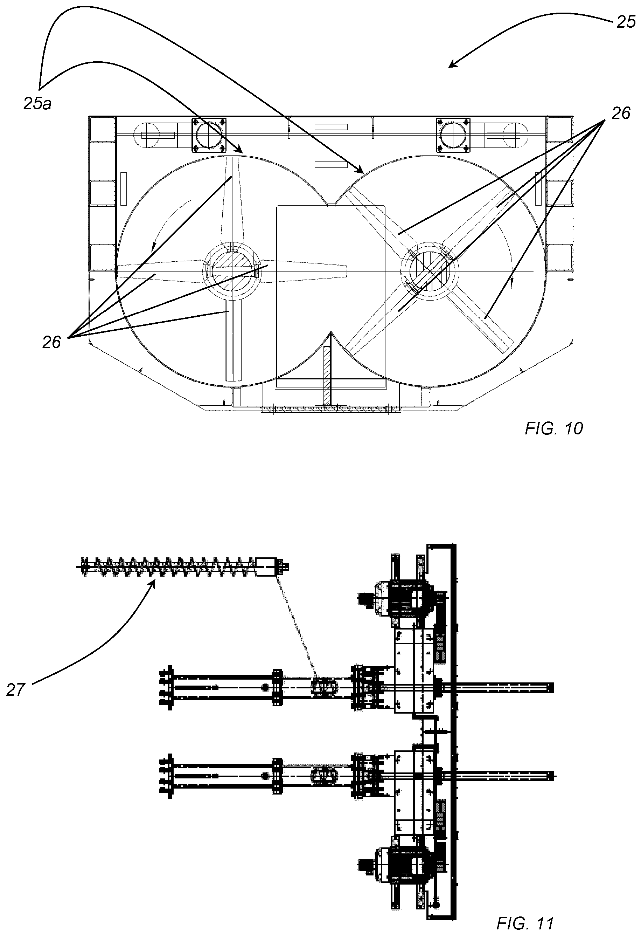

In the particular embodiment of the invention, as can be seen in fig. 10, the tank **25** of the kneader **24** comprises two portions **25a** with a circular section partially intersecting each other, each having a diameter of 702 mm. Given that the two aforesaid portions of the tank of the kneaders installed in known industrial pasta production plants have a maximum diameter of 602 mm with the same shape of the tank, the thus increased sizes make it possible to manage greater quantities of dough with respect to what occurs in equivalent pasta production plants of the prior art.

However, this aspect must not be considered limiting for different embodiments of the invention according to which, for example, there is a single tank or it comprises more than two portions with a circular section or any section. The same applies to the size of the aforementioned portions and the shape of the tank, which can be greater or less than 702 mm, or the tank could be wider and lower or higher and narrower, without any limit for the present invention.

Moreover, according to another aspect of the invention, the compression screw **27** has a longitudinal extension equal to 3027 mm and a diameter of 260 mm.

Since the compression screws installed in the known industrial pasta production plants are typically maximum 2665 mm long and with a maximum diameter equal to 235 mm, the sizes of the compression screw **27** of the present invention make it possible to manage greater quantities of dough with respect to what occurs in the equivalent pasta production plants of the prior art.

The same applies to the die **28** which, in the embodiment described herein, is enlarged in size with respect to the known dies. In fact, the die **28** has a length equal to 1330mm and a width equal to 300mm compared to known dies which, in larger plants, typically measure 1230 mm in length and 250 mm in width.

Obviously, a larger size of the die allows a greater number of holes to be made through it. As a result, advantageously, an extrusion of more pasta is guaranteed in the same period of time with respect to what occurs with the known dies.

However, what has been said so far must not be considered limiting for different embodiments of the invention according to which, for example, both the compression screw and the die have smaller or greater measures than those indicated above.

According to another aspect of the invention, the long pasta production plant **1** also comprises a spreading area **29** of the long pasta generated on the support sticks **9.**

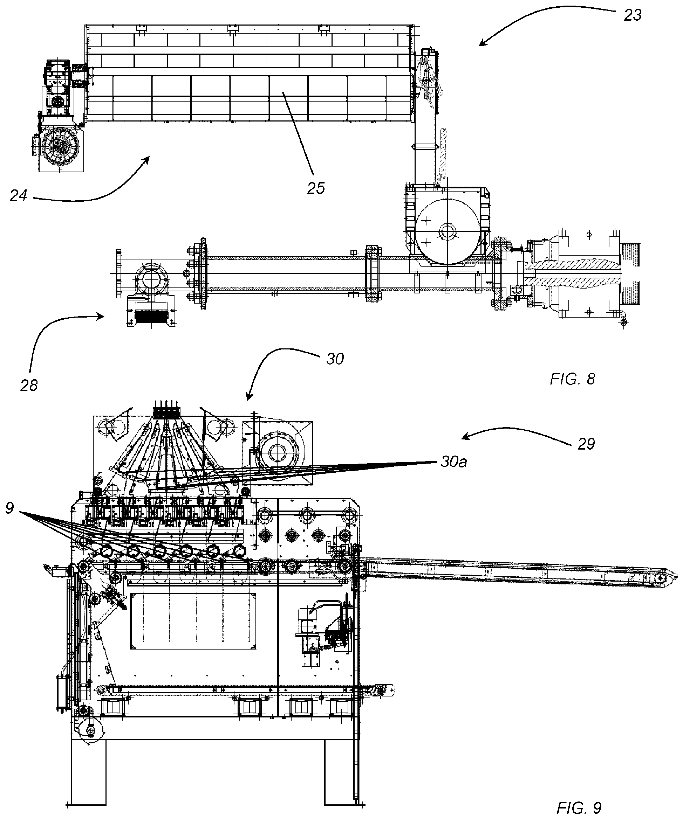

In this regard, it is noted that in the embodiment described herein the support sticks **9** are six in that, as can also be seen in fig. 9, the spreading area **29** comprises a sixfold spreader **30.** In other words, the spreader **30** comprises six descents **30a** for spreading the dough on the six support sticks **9.**

Advantageously, the sixfold spreader **30** and the six support sticks **9** allow, once again, to produce a greater quantity of pasta in the same production cycle, unlike what happens, for example, in equivalent pasta production plants that have a fivefold spreader.

However, both the fact that it is a sixfold spreader **30** and the number of support sticks **9,** it is noted that they should not be considered limiting characteristics for different embodiments of the invention according to which, for example, the spreader has less than six descents and, consequently, the sticks are less than six in number, that is, they are as many as the descents of the spreader.

In other words, the presence of the mover **10** according to the invention facilitates the possibility of increasing the production of pasta while preserving the quality thereof.

In this sense, advantageously, the increase in the length of the sticks **9** allows, once again, to increase the amount of pasta produced with a production cycle, while advantageously maintaining the classic timing of the pasta production cycle at an industrial level.

Still advantageously, the above also allows for a reduction in the production time for long pasta with respect to what occurs in equivalent plants using the prior art.

And not only that. The above also allows cost savings, being able to produce a greater amount of pasta in the same production cycle and in the same time in which less pasta was produced in the known plants.

It is noted, however, that the choice to lengthen the support sticks **9** and not to increase, on the contrary, the number of descents **30a** of the spreader **30** beyond six is not accidental.

In fact, in order to obtain a quality product, that is, in which the pasta strands are all very similar to each other in the amount of product of which they are made and therefore in their relative consistency, increasing the number of descents to more than six and, consequently, inserting more sticks, the pasta strands that would be extruded from the outermost holes of the die would not have the same amount of dough and texture of the final product. In fact, the wider the die and the spreader, the greater the effort that the compression screw should make to push the dough with the right intensity towards the die. To this end, it would be necessary to increase the speed of rotation of the compression screw and, consequently, there would be a risk of overheating the dough with consequent loss of quality of the final product.

Moreover, increasing the number of sticks and relative descents from the die would have the consequence that the outermost descents would have a too little accentuated inclination to guarantee the correct descent of pasta from the die to the sticks.

In light of the above, the considerable advantage offered by increasing the longitudinal extension of the support sticks **9** in synergy with the mover **10** of the invention is therefore evident.

With regard to the multi-storey area **2** of the long pasta production plant **1,** it is noted that, since the sticks **9** are longer than those provided for the known plants in order to increase pasta production, the management of their transport on the first pair of chains **6** and on the second pair of chains **7** supporting the ends thereof requires particular attention. In fact, although there may be a single motorisation for the movement of both pairs of chains **6** and **7,** it is evident that the transport of motion from such motorisation to each chain of the first pair of chains **6** and the second pair of chains **7** may not be perfect, thereby causing misalignments between the chains themselves. The elongation of the sticks **9** necessarily entails a widening of the distance between the chains, making the phenomenon of misalignment more dangerous than the equivalent known plants.

To overcome this drawback, according to another aspect of the invention, the multi-storey area **2** comprises a chain movement unit, which comprises a first thrust kinematics **32** of the chains and a second traction kinematics **33** thereof.

Advantageously, the presence of the double kinematics, that of thrust **32** and that of traction **33,** allows the chains and therefore the sticks **9** which are arranged resting on them to be moved efficiently. In fact, it is particularly useful in the production plant **1** of the invention since a large amount of pasta is managed therein and, consequently, the chains are strongly stressed by the weight thereof.

In fact, having to transport a greater amount of pasta thanks to the sticks **9** that are longer than 2550 mm, the presence of the first thrust kinematics **32** and the second traction kinematics **33** makes it possible to move the chains and the sticks **9** supported by them with linearity. In particular, the addition of a thrust to the movement of the chains allows limiting, if not zeroing, the possible mutual misalignments, overcoming the drawback highlighted above.

Moreover, according to another aspect of the invention, each movement path of each chain of the first pair of chains **6** and the second pair of chains **7** comprises a depression section **35** at which a pendulum **35a** is arranged so as to force laying the respective chains inside the depression **35.**

Advantageously, the presence of the depression **35** makes it possible to align the chains in the event of the misalignment thereof.

Still advantageously, the traction and thrust of the chains makes it possible to limit the stretching thereof while preserving the mechanical integrity thereof.

Moreover, still advantageously, the presence of the depression **35** makes it possible to avoid any accumulation of each chain of the first pair of chains **6** and the second pair of chains **7.** In fact, with the tendency to create such accumulations, which is moreover accentuated by the thrust kinematics, the presence of the depression with the respective downward thrust pendulum allows this phenomenon to be corrected and avoided.

However, what has been said is not to be considered a limiting characteristic for different embodiments of the invention, both with reference to the presence of the depression and the pendulum and with reference to the number of depressions and respective pendulums along the movement path of the chains that in different embodiments, for example, are more than one.

In the particular embodiment described herein, the movement is allowed thanks to the presence of a thrust gearmotor **36a** and a traction gearmotor **36b** to generate the motion of the first thrust kinematics **32** and the second traction kinematics **33.** The two gearmotors **36a** and **36b** are suitably synchronized by means of a typically electronic control.

Advantageously, such a configuration makes it possible to keep the chains constantly synchronized with each other.

It follows that the movement unit thus described makes it possible to obtain a long pasta production plant **1** that is particularly efficient in the movement of the pasta throughout the production cycle.

This should not be considered limiting for different embodiments of the invention with reference to the two kinematic mechanisms. For example, there are embodiment variants where the two kinematics provide for the use of a single motor and two separate mechanical transmissions (including also reducers). Obviously, in this case an electronic control is not essential for synchronization.

Operationally, inside the multi-storey area **2** of the long pasta production plant **1** of the invention, the support sticks **9** first travel along the first storey **3** arranged resting on the first pair of chains **6.** Once the entire length of the first storey **3** has been travelled, the mover **10** lifts the support sticks **9** from the first storey **3,** moves them laterally away therefrom, moves them vertically towards the subsequent storey **4** and brings them laterally towards the latter until they overlap. Once arranged at an initial end of the subsequent storey **4,** the mover **10** lays the support sticks **9** on the second pair of chains **7** of the subsequent storey **4.**

In light of the foregoing, it is understood that the long pasta production plant according to the invention achieves all the intended purposes.

In particular, it makes it possible to maintain the optimal quality of the pasta produced despite the path of the pasta not being linear.

In fact, the long pasta production plant makes it possible to prevent the pasta from coming into contact with the walls of the pre-drying or drying oven and which, therefore, does not suffer contamination.

As a result, the long pasta production plant of the invention prevents the long pasta from rocking during the transfers from one storey to the next and from falling

Therefore, it makes it possible to prevent the long pasta from being damaged or the pasta strands from sticking to each other.

Moreover, the long pasta production plant of the invention allows drying large quantities of long pasta while keeping the plant compact.

The invention is subject to numerous modifications and variations, all falling within the appended claims. All the details may be replaced by other technically equivalent elements, and the materials may be different according to requirements, without departing from the scope of protection of the present invention.

## Claims

1. Long pasta production plant having at least one multi-storey area **(2)** comprising:
- at least a first storey **(3)** and at least one subsequent storey **(4)** respectively having at least a first pair of chains **(6)** and at least a second pair of chains **(7)** for moving at least one long pasta support stick **(9);**
- at least one mover **(10)** of said at least one stick **(9)** at least between said at least a first storey **(3)** and at least one subsequent storey **(4),**
said at least one multi-storey area **(2)** being **characterized in that** said at least one mover **(10)** comprises at least one pair of collection elements **(11)** of said at least one support stick **(9),** said at least one mover **(10)** lifting said at least one support stick **(9)** from said at least a first pair of chains **(6)** of said first storey **(3),** laterally moving away from said first storey **(3),** moving vertically towards said subsequent storey **(4),** laterally approaching said subsequent storey **(4)** until they overlap, said at least one stick **(9)** resting above said second pair of chains **(7)** of said subsequent storey **(4).**

2. Long pasta production plant according to Claim 1, **characterized in that** said at least one mover **(10)** comprises at least one vertical movement kinematics **(13).**

3. Long pasta production plant according to Claim 1 or 2, **characterized in that** said at least one mover **(10)** comprises at least one horizontal translation device **(17)** of said at least one vertical movement kinematics **(13).**

4. Long pasta production plant according to Claim 2 or 3, **characterized in that** said at least one vertical movement kinematics **(13)** comprises at least one pair of toothed wheels **(14)** and at least one transmission chain **(15),** each collection element of said pair of collection elements **(11)** being operatively coupled to said at least one transmission chain **(15).**

5. Long pasta production plant according to one or more of claims 2 to 4, **characterized in that** it comprises at least one motor **(18a; 18)** for generating the motion of said at least one kinematics **(13)** and said horizontal translation device **(17).**

6. Long pasta production plant according to one or more of claims 3 to 5, **characterized in that** said at least one horizontal translation device **(17)** comprises at least one fixed rack and a toothed wheel moving thereon.

7. Long pasta production plant according to one or more of the preceding claims, **characterized in that** each of said collection elements **(11)** of said at least one pair of collection elements **(11)** comprises a shaped body in which at least one depression **(21)** is identified for housing at least one free end of said at least one stick **(9).**

8. A method for moving at least one long pasta support stick **(9)** from a first storey **(3)** to a subsequent storey **(4)** in a multi-storey long pasta production plant **(1)** comprising at least one long pasta support stick **(9),** said method being **characterized in that** it comprises the following steps:
- lifting said at least one support stick **(9)** from said first storey **(3);**
- laterally moving away from said first storey **(3);**
- vertically moving towards said subsequent storey **(4);**
- laterally approaching said subsequent storey **(4)** until they overlap;
- laying said at least one stick **(9)** above said subsequent storey **(4).**
